# EUROPÄISCHE PATENTSCHRIFT

(11) **EP 2 918 390 B1**
(45) Veröffentlichungstag und Bekanntmachung des Hinweises auf die Patenterteilung: **20.10.2021**
(21) Anmeldenummer: 15158906.6
(22) Anmeldetag: 13.03.2015
(51) Int. Cl.: B29C 48/10, B29C 48/14, B29C 48/27, B29C 55/28

(54) **VERFAHREN UND EINRICHTUNG ZUR HERSTELLUNG EINES EXTRUSIONSPRODUKTES**
METHOD AND DEVICE FOR PRODUCING AN EXTRUSION PRODUCT
PROCÉDÉ ET DISPOSITIF DE FABRICATION D'UN PRODUIT D'EXTRUSION

(30) Priorität: 13.03.2014 DE 102014103388
(43) Veröffentlichungstag der Anmeldung: 16.09.2015
(73) Patentinhaber: Plur, Andreas, 63571 Gelnhausen (DE)
(72) Erfinder: Plur, Andreas, 63571 Gelnhausen (DE)
(74) Vertreter: Stoffregen, Hans-Herbert

(56) Entgegenhaltungen:
- EP-A1- 0 958 910
- JP-A- 2002 067 146
- JP-A- 2003 200 490
- JP-A- 2009 090 541
- None

## Beschreibung

Die Erfindung bezieht sich auf ein Verfahren zur Herstellung eines Extrusionsproduktes, insbesondere Folienschlauch oder Folienbahn, wobei aus einem außerhalb des Reinraums angeordneten Extruder mit mindestens einem Extruderkopf das Extrusionsprodukt aus thermoplastischem Kunststoff kontinuierlich ausgegeben, nahe dem Extruderkopf das Extrusionsprodukt durch in dessen Bewegungsrichtung über eine ringförmige einen Austrittsbereich des Extruders umgebende Düsenanordnung ausgeblasene Reinluft als Kühlluft einer gewünschten Temperatur gekühlt und das abgekühlte und erstarrte Extrusionsprodukt weiterverarbeitet wird, wobei das Extrusionsprodukt in den Reinraum hinein extrudiert wird. Auch nimmt die Erfindung Bezug auf eine Einrichtung zur Herstellung eines Extrusionsproduktes, insbesondere Folienschlauch oder Folienbahn, mit zumindest einem Extruder mit zumindest einem Extruderkopf, aus dem das Extrusionsprodukt aus thermoplastischem Kunststoff kontinuierlich ausgebbar ist, mit einer das Extrusionsprodukt umgebenden ringförmigen einen Austrittsbereich des Extruders umgebenden Düsenanordnung, aus der Reinluft als Kühlluft einer gewünschten Temperatur in Bewegungsrichtung des Extrusionsprodukts ausblasbar ist, wobei das Extrusionsprodukt mittels des Extruders in einen Reinraum hinein extrudierbar ist, wobei der Extruder außerhalb des Reinraums angeordnet ist und der Extruderkopf eine Schnittstelle zwischen dem Extruder und dem Reinraum bildet,

Ein Verfahren zur Herstellung von Blas- und Gießfolien und eine Einrichtung zur Durchführung des Verfahrens sind in der DE 198 16 869 A1 beschrieben. Die Folien werden für Verpackungen, beispielsweise für Lebensmittel, Medikamente, technische Artikel oder medizinische Präparate eingesetzt.

Zur Herstellung besonders reiner Blas- oder Gießfolien wird vorgeschlagen, dass zusätzlich zu der Kühlluft an mindestens einer weiteren in Bewegungsrichtung des Folienschlauchs oder der Folienbahn dahinterliegenden Stelle zusätzlich Luft ebenfalls ringförmig ausgeblasen wird. Dabei bilden die Kühlluft und die zusätzliche Luft zusammen einen ringförmigen den Folienschlauch oder die Folienbahn vom Extruderkopf bis zu den Förderwalzen umgebenden Luftschleier in laminarer Strömung. Sowohl für die Kühlluft als auch für die zusätzliche Luft wird gefilterte Reinluft verwendet. Nachteilig ist, dass im Randbereich der laminaren Strömung Verwirbelungen auftreten, so dass Schmutzpartikel den Luftschleier durchsetzen können, so dass eine Kontamination erfolgt.

Die Erzeugung des Luftschleiers zur Erzeugung der laminaren Strömung ist mit einem erheblichen Aufwand verbunden, da zur Erzeugung des ringförmigen Luftschleiers eine Vielzahl von Luftdüsen notwendig ist. Des Weiteren besteht das Problem, dass sich sowohl der Extruder, der Kühlring, die Luftdüsen und deren Aggregate zusammen mit dem Extrusionsprodukt in einem Raum befinden, so dass nicht ausgeschlossen ist, dass das Extrusionsprodukt durch Staubpartikel verunreinigt wird, welche durch die Aggregate erzeugt werden.

In dem Artikel "Greiner investiert in Reinraum", K-Zeitung Online, 09.09.2011, wird eine Blasfolienanlage beschrieben, bei der der Maschinenpark außerhalb eines Reinraums angeordnet ist. Über eingehauste Transportbänder werden Gebinde in den Reinraum gefördert.

In der DE.Z. ReinRaumTechnik 1, 2014, Seiten 52 bis 53, wird eine Extruderlinie beschrieben, die in einem Reinraum angeordnet ist.

Nachteilig bei den vorbekannten Anordnungen ist, dass innerhalb des Reinraums Montage- und Einstellarbeiten durchgeführt werden müssen. Hierzu erforderliche Werkzeuge müssen folglich zuvor dekontaminiert werden, um eine Verunreinigung des Reinraums auszuschließen. Ferner befinden sich in dem Reinraum sodann die zum Extrudieren benötigten Motoren, also Wärmequellen, die eine zusätzliche Kühlung innerhalb des Reinraums erforderlich machen.

Der EP 0 958 910 A1 sind ein Verfahren und eine Vorrichtung zum Herstellen einer Kunststofffolie zu entnehmen. Zur Herstellung der Folie wird ein Schlauch in einen mit Luft beaufschlagten Raum hineinextrudiert, um sodann außerhalb des Raums den zu einer Folie flachgedrückten Schlauch einer Prüfstation zuzuführen. In dem Raum wird ein stehender Schlauch erzeugt, der von ringförmigen den Schlauch umgebenden Düsen mit Luft eingehüllt wird, die aus dem Raum abgesaugt und gereinigt wird.

Der JP 2003-200490 A ist eine Anordnung zum Herstellen eines Kunststoffproduktes zu entnehmen, das in einem Reinraum hergestellt wird. Ein hierzu verwendeter Extruder befindet sich außerhalb des Reinraums.

Auch nach der JP 2009-090541 A wird in einem Reinraum ein Extrusionsprodukt hergestellt. Bei der Herstellung wird die Zufuhr von Luft in den Reinraum unterbrochen.

Eine Anordnung zum Herstellen einer Kunststofffolie ist der JP 2002-067146 A2 zu entnehmen.

Der vorliegenden Erfindung liegt die Aufgabe zugrunde, bei geringem Aufwand die Herstellung von besonders reinen Extrusionsprodukten zu ermöglichen, wobei der konstruktive Aufwand bezüglich der zu erzeugenden Reinluft gering gehalten werden soll.

Die Aufgabe wird verfahrensmäßig unter anderem dadurch gelöst, dass die über die Düsenanordnung ausgeblasene Reinluft zur Kühlung des Extrusionsproduktes mit einem außerhalb des Reinraums angeordneten Gebläse aus dem Reinraum abgesaugt und ohne zusätzliche Filterung der in dem Reinraum oder in einer den Reinraum begrenzenden Wandung angeordneten oder von dieser ausgehenden und in dem Reinraum angeordneten ringförmigen Düsenanordnung zugeführt wird, und dass das Extrusionsprodukt in dem Reinraum abgezogen und aufgewickelt wird.

Erfindungsgemäß wird das Extrusionsprodukt in den Reinraum hinein extrudiert, ohne dass sich der Extruder selbst in dem Reinraum befindet. Der Extruderkopf kann innerhalb des Reinraums oder in einer den Reinraum begrenzenden Wandung angeordnet sein. Dadurch, dass sich der Extruder außerhalb des Reinraums befindet, werden Wartungs- und Einstellarbeiten außerhalb des Reinraums durchgeführt. Auch kann eine problemlose Abfuhr der Wärme des Extruders erfolgen, da sich dieser nicht in dem Reinraum befindet. Die durch die Aggregate des Extruders bedingten Kontaminationsquellen befinden sich nicht in dem Reinraum.

Die zum Kühlen des Extrusionsprodukts benötigte Kühlluft wird von einer ringförmig verlaufenden Düsenanordnung abgegeben, um somit einen Luftschleier zu erzeugen, der eine das Extrusionsprodukt umgebende Umhüllende bildet, also im Schnitt insbesondere eine Ringgeometrie aufweist. Dabei kann die die Kühlluft abgebende ringförmige Düsenanordnung gleichfalls in der den Reinraum begrenzenden Wandung vorhanden sein bzw. von dieser ausgehen oder innerhalb des Reinraums angeordnet sein. Unabhängig hiervon umgibt die Ringanordnung den Extruderkopf, insbesondere koaxial.

Gemäß der Erfindung ist vorgesehen, dass die Reinluft zur Kühlung des Extrusionsproduktes mit einem außerhalb des Reinraums angeordneten Gebläse aus dem Reinraum abgesaugt und einem in dem Reinraum angeordneten Kühlring zur Kühlung des Extrusionsproduktes zugeführt wird.

Das Verfahren zeichnet sich gegenüber dem Stand der Technik dadurch aus, dass Staubpartikel erzeugende Einrichtungen und deren Aggregate wie Extruder und/oder Lüfter außerhalb des Reinraums angeordnet werden, so dass die Verunreinigung des Reinraums durch den Extruder und dessen Aggregate sowie Gebläse und/oder Filter möglichst ausgeschlossen wird. Da das Extrusionsprodukt in den Reinraum extrudiert wird und mit Reinluft gekühlt wird, ist die Erzeugung eines das Extrusionsprodukt umschließenden Luftschleiers zum Fernhalten von Schmutzpartikeln nicht erforderlich. Die zum Kühlen des Extrusionsprodukts benötigte Kühlluft hat somit allein die Aufgabe des Kühlens, ohne dass die nach dem Stand der Technik erforderlichen Zusatzaufgaben zum Fernhalten von Schmutzpartikeln erfüllt werden müssen.

Die erfindungsgemäße Verfahrensweise zeichnet sich dadurch aus, dass die Reinluft im Inneren des Reinraums im Bereich einer Reinluftzuströmung abgesaugt wird. Somit kann auf einen separaten Reinluftfilter für die Kühlluft verzichtet werden.

Des Weiteren zeichnet sich das Verfahren dadurch aus, dass als Extrusionsprodukt ein Folienschlauch oder eine Folienbahn extrudiert wird und dass der Folienschlauch oder die Folienbahn in dem Reinraum abgezogen und aufgewickelt werden.

Eine weitere bevorzugte Ausfuhrungsform des Verfahrens zeichnet sich dadurch aus, dass die Luft zum Aufblasen des Folienschlauchs aus dem Reinraum abgesaugt wird.

Eine erfindungsgemäße Einrichtung zur Durchführung des Verfahrens ist dadurch gekennzeichnet, dass ein Gebläse zum Ansaugen von Reinluft aus dem Reinraum außerhalb des Reinraums angeordnet ist, dass das Gebläse über eine Verbindungsleitung filterlos mit der in dem Reinraum oder in einer den Reinraum begrenzenden Wandung angeordneten oder von dieser ausgehenden und in dem Reinraum angeordenten ringförmigen Düsenanordnung zur Zuführung der Reinluft als Kühlluft ohne zusätzliche Filterung verbunden ist, und dass in dem Reinraum zum Aufwickeln des Extrusionsprodukts eine Wickelvorrichtung angeordnet ist.

Das Gebläse zum Ansaugen von Reinluft aus dem Reinraum ist außerhalb des Reinraums angeordnet und über eine Verbindungsleitung mit einem in dem Reinraum angeordneten Kühlring zur Zuführung der Reinluft als Kühlluft verbunden.

Die Einrichtung zeichnet sich gegenüber dem Stand der Technik dadurch aus, dass der Reinraum frei von Aggregaten ist, die zum Extrudieren benötigt werden, so dass die Erzeugung von Kontamination wie Staubpartikeln im Reinraum auf ein Minimum reduziert wird.

Vorzugsweise weist der Reinraum einen Reinraumfilter zur Zuführung der Reinluft auf, wobei ein mit dem Gebläse verbundener Ansaugstutzen im Bereich eines Reinluftaustritts des Reinraumfilters angeordnet ist.

Eine besonders bevorzugte Ausführungsform sieht vor, dass der Extruderkopf als die Schnittstelle zwischen Extruder und dem Reinraum in einer Wandung des Reinraums angeordnet ist bzw. von dieser ausgeht.

Der Extruderkopf kann eine Öffnung der Wandung durchsetzen und ggfs. stirnseitig bündig oder in etwa bündig zu der reinrauminnenseitig verlaufenden Fläche der Wandung verlaufen.

Zum Umströmen des extrudierten Folienschlauchs mit Kühlluft ist vorgesehen, dass der Kühlring koaxial zu dem Extruderkopf angeordnet ist.

Weitere Einzelheiten, Vorteile und Merkmale der Erfindung ergeben sich nicht nur aus den Ansprüchen, den diesen zu entnehmenden Merkmale - für sich und/oder in Kombination - sondern auch aus der nachfolgenden Beschreibung der Zeichnung.

Es zeigen:
- Fig. 1: eine Prinzipdarstellung einer ersten Ausführungsform einer Einrichtung zur Herstellung eines Extrusionsproduktes,
- Fig. 2: eine zweite Ausführungsform einer Einrichtung zur Herstellung eines Extrusionsproduktes,
- Fig. 3: eine Variante der Einrichtung gemäß Fig. 2 und im Ausschnitt und
- Fig. 4: eine weitere Ausführungsform einer Einrichtung zur Herstellung eines Extrusionsproduktes.

In den Figuren, in denen grundsätzlich gleiche Elemente mit gleichen Bezugszeichen versehen sind, werden rein prinzipiell Einrichtungen dargestellt, mittels derer Extrusionsprodukte in Form eines Folienschlauchs aus insbesondere thermoplastischem Kunststoff kontinuierlich extrudiert werden.

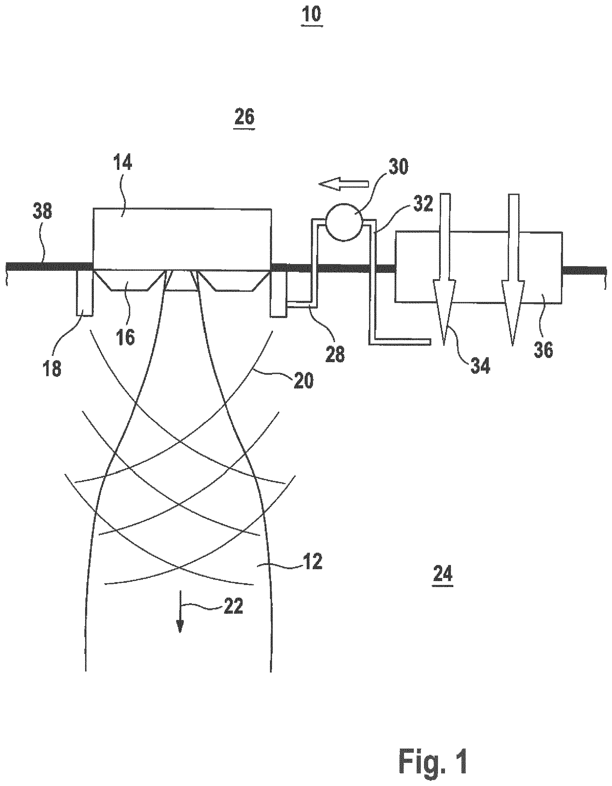

So zeigt Fig. 1 eine Einrichtung 10 zur Herstellung eines Extrusionsproduktes 12 in Form eines Folienschlauches 12. Dieser wird mittels eines Extruders 14 mit zumindest einem Extruderkopf 16 extrudiert. Koaxial zu dem Extruderkopf 16 ist ein Kühlring 18 angeordnet, aus dem Reinluft 20 als Kühlluft mit einer gewünschten Temperatur und Bewegungsrichtung 22 auf den Folienschlauch 12 blasbar ist.

Gemäß der Erfindung wird der Folienschlauch 12 mittels des Extruderkopfes 16 in einen Reinraum 24 ausgeblasen, wobei der mit dem Extruderkopf 16 verbundene Extruder 14 in einem Raum 26 außerhalb des Reinraums 24 angeordnet ist. Dabei bildet der Extruderkopf 16 eine Schnittstelle zwischen dem Extruder 14 und dem Reinraum 24.

Der Kühlring 18 ist über eine Zuleitung 28 mit einem Kühlgebläse 30 verbunden, welches in dem Raum 26 außerhalb des Reinraums 24 angeordnet ist. Über eine Ansaugleitung 32 ist das Kühlgebläse 30 mit dem Inneren des Reinraums 24 verbunden, um Reinluft 34 abzusaugen. Die Reinluft wird dem Reinraum 24 aus dem angrenzenden Raum 26 über einen Reinluftfilter 36 zugeführt. Im dargestellten Ausführungsbeispiel ist der Extruderkopf 16 in einer Wandung 38 des Reinraums 24 angeordnet.

Das Verfahren und die Einrichtung zur Herstellung des Folienschlauchs zeichnet sich gegenüber dem Stand der Technik dadurch aus, dass der Reinraum 24 im Wesentlichen frei von Aggregaten ist, die eine Quelle von Luftverunreinigungen darstellen können.

Durch die Verwendung von Reinluft aus dem Reinraum 24 wird des Weiteren der Vorteil erreicht, dass auf eine zusätzliche Filterung der Kühlluft verzichtet werden kann.

Wartungsarbeiten, die am Extruder 14 erforderlich sind, erfolgen außerhalb des Reinraums 24. Die während des Extrudierens auftretende Wärme kann problemlos abgeführt werden, ohne dass es besonderer Kühleinrichtungen innerhalb des Reinraums 24 bedarf.

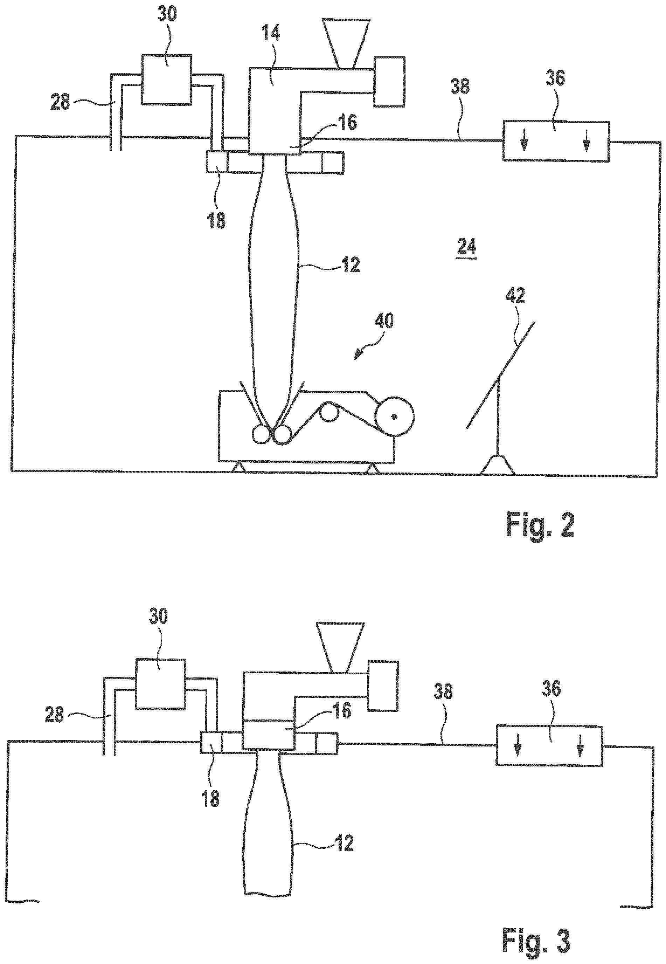

In Fig. 2 ist ein Reinraum 24 prinzipiell dargestellt, dessen Begrenzung also Wandung 38 von dem Extruderkopf 16 durchsetzt ist, der somit Schnittstelle zwischen dem Extruder 14 und dem Reinraum 24 ist.

Die in dem Reinraum 24 benötigte Reinluft wird über den Reinraumluftfilter 36 zugeführt, dem eine Ventilatoreinrichtung zugeordnet ist.

Wie die Prinzipdarstellung verdeutlicht, befindet sich im Kopfbereich des Reinraums 24 der Extruderkopf 16, der im Austrittsbereich von einer ringförmigen Düsenanordnung 18 umgeben ist, um Kühlluft auf das extrudierte Produkt zu geben und um dieses zu kühlen. Bei dem Extrusionsprodukt handelt es sich insbesondere um einen Schlauch. In den Schlauch wird zum Ausbilden dieses Druckluft eingeleitet, die dem Grunde nach noch eine stehende Luftsäule bildet; denn nach Befüllen des Schlauches verbleibt die Luft innerhalb von diesem, da der Schlauch 12 über nicht näher bezeichnete Förderwalzen von einer Wickelvorrichtung 40 sodann in gewohnter Weise aufgewickelt wird.

Die zur Erzeugung der Druckluft benötigte Luft kann aus dem Reinraum 24 abgesaugt werden.

Die dem Kühlring 18 zugeführte Luft wird aus dem Reinraum 24 abgesaugt (Leitung 28), in dem sich ein Kühler 30 befinden kann.

Nach dem Ausführungsbeispiel der Fig. 2 wird der Schlauch 12 im Bodenbereich aufgewickelt, also der Schlauch 12 in Richtung der Schwerkraft aus dem Extruderkopf 16 abgezogen.

Unabhängig davon, ob der Extruderkopf 16 mit seiner Stirnfläche, also der Fläche, aus der das Extrusionsprodukt austritt, innenseitig über der Innenfläche der Begrenzungswandung 38 vorsteht oder zu dieser bündig verläuft, befindet sich der Extruder 14 selbst außerhalb des Reinraums 24.

Der Extruderkopf 16 ist üblicherweise ein heizbarer Metallzylinder mit kreisförmiger Düse, die die Geometrie eines Ringspaltes aufweist, durch den das geschmolzene Polymer herausgedrückt wird.

Der Extruderkopf 16 kann - wie nach dem Stand der Technik - erwähntermaßen ein heizbarer Metallzylinder sein, wobei sich an der Unter- oder Oberseite die Düse befindet. Ausstoßrichtung des geschmolzenen Polymers verläuft üblicherweise im rechten Winkel zur Längsachse der Extruderschnecke. Die diesbezüglichen Konstruktionsmerkmale sind jedoch nicht schutzeinschränkend.

Um gezielt Kühlluft nicht nur über die ringförmige Düsenanordnung 18 auf den Schlauch 12 zu richten, sondern auch im erforderlichen Umfang Kühlluft in dem Raum 24 zu verteilen, ist des Weiteren ein Leitelement wie Luftleittafel 42 vorgesehen, die rein prinzipiell in Fig. 2 dargestellt ist. Somit kann die über den Filter 36 zugeführte Luft im gewünschten Umfang in dem Raum 24 verteilt werden.

Befindet sich nach der Fig. 2 die ringförmige Düsenanordnung 18 innerhalb des Reinraums 24, so ist nach der Fig. 3 vorgesehen, dass - wie der Extruderkopf 16 - innerhalb der Wand 38 die ringförmige Düsenanordnung 18 angeordnet, also in der Wand 38 integriert ist. Extruderkopf 16 und Düsenanordnung 18 können somit z. B. von einer gemeinsamen, eine Öffnung der Wand 38 verschließenden Halterung ausgehen.

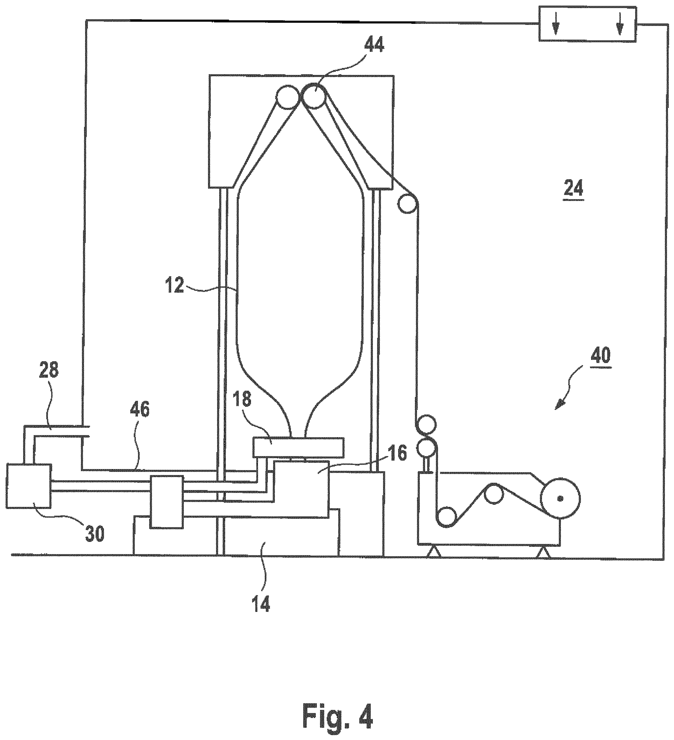

Das Ausführungsbeispiel der Fig. 4 unterscheidet sich von dem der Fig. 1 bis 3 dahingehend, dass der Schlauch 12 entgegen der Schwerkraft aus dem Extruderkopf 16 abgezogen wird. Der Schlauch 12 wird nach hinreichender Kühlung sodann über Rollen 44, die sich im Kopfbereich des Reinraums 24 befinden, und nicht näher bezeichnete Umlenkrollen der Wickelvorrichtung 40 zugeführt.

Die auch als Lüftung bezeichnete ringförmige Düsenanordnung 18 befindet sich bei dem Ausführungsbeispiel der Fig. 4 innerhalb des Reinraums 24, gleichwenn der Luftring 18 auch wiederum in der Schnittstelle zwischen Reinraum 24 und Umgebung verlaufen kann. In diesem Falle wäre der Luftring 18 zusammen mit dem Extruderkopf 16 innerhalb der Begrenzungswandung 46 des Reinraums 24 integriert. Die Begrenzungswandung 46 verläuft entsprechend der Prinzipdarstellung im Bodenbereich des Reinraums 24.

Wie bei dem Ausführungsbeispiel der Fig. 1 bis 3 wird die ringförmige Düsenanordnung 18, über die Kühlluft auf den Schlauch 12 abgegeben wird, mit aus dem Reinraum 24 abgesaugter Luft beaufschlagt (Leitung 28). Die abgesaugte Reinluft kann dabei über ein Kühlaggregat 30 auf eine gewünschte Temperatur eingestellt werden, bevor diese dem Kühlring 18 zugeführt wird.

## Patentansprüche

1. Verfahren zur Herstellung eines Extrusionsproduktes (12), insbesondere Folienschlauch oder Folienbahn, wobei aus einem außerhalb eines Reinraums (24) angeordneten Extruder (14) mit mindestens einem Extruderkopf (16) das Extrusionsprodukt (12) aus thermoplastischem Kunststoff kontinuierlich ausgegeben, das Extrusionsprodukt (12) durch in dessen Bewegungsrichtung über eine ringförmige einen Austrittsbereich des Extruders umgebende Düsenanordnung (18) ausgeblasene Reinluft (20) als Kühlluft einer gewünschten Temperatur gekühlt und das abgekühlte Extrusionsprodukt (12) weiterverarbeitet wird, wobei das Extrusionsprodukt (12) in den Reinraum (24) hinein extrudiert wird,
**dadurch gekennzeichnet,**
**dass** die über die Düsenanordnung (18) ausgeblasene Reinluft zur Kühlung des Extrusionsproduktes mit einem außerhalb des Reinraums (24) angeordneten Gebläse (30) aus dem Reinraum (24) abgesaugt und ohne zusätzliche Filterung der in dem Reinraum (24) oder in einer den Reinraum begrenzenden Wandung (38) angeordneten oder von dieser ausgehenden und in dem Reinraum angeordneten ringförmigen Düsenanordnung (18) zugeführt wird, und dass das Extrusionsprodukt in dem Reinraum abgezogen und aufgewickelt wird.

2. Verfahren nach Anspruch 1,
**dadurch gekennzeichnet,**
**dass** der Extruderkopf (16) innerhalb des Reinraums (24) oder in der den Reinraum begrenzenden Wandung (38) angeordnet wird.

3. Verfahren nach Anspruch 1 oder 2,
**dadurch gekennzeichnet,**
**dass** die ringförmige Düsenanordnung (18) den Extruderkopf (16) koaxial umgibt.

4. Verfahren nach zumindest einem der vorhergehenden Ansprüche,
**dadurch gekennzeichnet,**
**dass** die Reinluft im Inneren des Reinraums (24) im Bereich einer Reinluftzuströmung (36) abgesaugt wird und/oder dass Luft zum Aufblasen des Folienschlauchs aus dem Reinraum (24) abgesaugt wird.

5. Einrichtung (10) zur Herstellung eines Extrusionsproduktes (12), insbesondere Folienschlauch oder Folienbahn mit zumindest einem Extruder (14) mit zumindest einem Extruderkopf (16), aus dem das Extrusionsprodukt (12) aus thermoplastischem Kunststoff kontinuierlich ausgebbar ist, mit einer das Extrusionsprodukt (12) umgebenden ringförmigen einen Austrittsbereich des Extruders umgebenden Düsenanordnung (18), aus der Reinluft (20) als Kühlluft einer gewünschten Temperatur in Bewegungsrichtung des Extrusionsprodukts (12) ausblasbar ist, wobei das Extrusionsprodukt (12) mittels des Extruders (14) in einen Reinraum (24) hinein extrudierbar ist, wobei der Extruder (14) außerhalb des Reinraums (24) angeordnet ist und der Extruderkopf (16) eine Schnittstelle zwischen dem Extruder (14) und dem Reinraum (24) bildet,
**dadurch gekennzeichnet,**
**dass** ein Gebläse (30) zum Ansaugen von Reinluft (20) aus dem Reinraum (24) außerhalb des Reinraums (24) angeordnet ist, dass das Gebläse über eine Verbindungsleitung (28) filterlos mit der in dem Reinraum (24) oder in einer den Reinraum (24) begrenzenden Wandung (38) angeordneten oder von dieser ausgehenden und in dem Reinraum angeordneten ringförmigen Düsenanordnung (18) zur Zuführung der Reinluft (20) als Kühlluft ohne zusätzliche Filterung verbunden ist, und dass in dem Reinraum zum Aufwickeln des Extrusionsprodukts eine Wickelvorrichtung (40) angeordnet ist.

6. Einrichtung nach Anspruch 5,
**dadurch gekennzeichnet,**
**dass** die ringförmige Düsenanordnung (18) koaxial zu dem Extruderkopf (16) angeordnet ist.

7. Einrichtung nach Anspruch 5 oder 6,
**dadurch gekennzeichnet,**
**dass** der Reinraum (24) einen Reinraumfilter (36) zur Zuführung der Reinluft (34) aufweist und dass ein mit dem Gebläse (30) verbundener Ansaugstutzen (32) im Bereich eines Reinluftaustritts des Reinraumfilters (36) angeordnet ist.

8. Einrichtung nach einem der Ansprüche 5 bis 7,
**dadurch gekennzeichnet,**
**dass** der Extruderkopf (16) in der den Reinraum (24) begrenzenden Wandung (38) angeordnet ist oder innerhalb des Reinraums angeordnet ist.

## Claims

1. Method for producing an extrusion product (12), in particular film tube or film web, the extrusion product (12) made of thermoplastic being continuously output from an extruder (14) arranged outside a clean room (24) and having at least one extruder head (16), the extrusion product (12) being cooled by clean air (20) emitted as cooling air of a required temperature in its direction of movement by an annular nozzle arrangement (18) surrounding an outlet area of the extruder, and the cooled extrusion product (12) being further processed, the extrusion product (12) being extruded into the clean room (24),
wherein
the clean air emitted by the nozzle arrangement (18) for cooling the extrusion product is extracted from the clean room (24) using a fan (30) arranged outside the clean room (24) and fed without additional filtering to the annular nozzle arrangement (18) arranged inside the clean room (24) or in a wall (38) limiting the clean room or extending therefrom and arranged inside the clean room, and the extrusion product is drawn off and wound on inside the clean room.

2. Method according to claim 1,
wherein
the extruder head (16) is arranged inside the clean room (24) or in the wall (38) limiting the clean room.

3. Method according to claim 1 or 2,
wherein
the annular nozzle arrangement (18) coaxially surrounds the extruder head (16).

4. Method according to at least one of the preceding claims,
wherein
the clean air inside the clean room (24) is extracted in the area of a clean air intake (36), and/or air for inflating the film tube is extracted from the clean room (24).

5. Device (10) for producing an extrusion product (12), in particular film tube or film web, having at least one extruder (14) with at least one extruder head (16) from which the extrusion product (12) made of thermoplastic can be continuously output, with an annular nozzle arrangement (18) surrounding the extrusion product (12) and surrounding an outlet area of the extruder, from which nozzle arrangement clean air (20) can be emitted as cooling air of a required temperature in the direction of movement of the extrusion product (12), the extrusion product (12) being extrudable into a clean room (24) by means of the extruder (14), the extruder (14) being arranged outside the clean room (24) and the extruder head (16) forming an interface between the extruder (14) and the clean room (24),
wherein
a fan (30) for extracting clean air (20) from the clean room (24) is arranged outside the clean room (24), the fan is connected via a connecting line (28) without filter to the annular nozzle arrangement (18) arranged inside the clean room (24) or in a wall (38) limiting the clean room (24) or extending therefrom and arranged inside the clean room for feeding the clean air (20) as cooling air without additional filtering, and a winding device (40) for winding on the extrusion product is arranged inside the clean room.

6. Device according to claim 5,
wherein
the annular nozzle arrangement (18) is arranged coaxially to the extruder head (16).

7. Device according to claim 5 or 6,
wherein
the clean room (24) has a clean room filter (36) for feeding the clean air (34), and an intake port (32) connected to the fan (30) is arranged in the area of a clean air outlet of the clean room filter (36).

8. Device according to one of claims 5 to 7,
wherein
the extruder head (16) is arranged in the wall (38) limiting the clean room (24) or inside the clean room.

## Revendications

1. Procédé de fabrication d'un produit d'extrusion (12), notamment d'un film tubulaire ou d'un ruban de film, sachant le produit d'extrusion (12) en matière synthétique thermoplastique sort en continu d'une extrudeuse (14) disposée à l'extérieur d'une salle blanche (24) avec au moins une tête d'extrusion (16), que le produit d'extrusion (12) est refroidi par de l'air pur (20) servant d'air de refroidissement à une température souhaitée, expulsé, dans le sens de déplacement du produit, par un dispositif à buse (18) de forme annulaire entourant une zone de sortie de l'extrudeuse et que le produit d'extrusion (12) refroidi est transformé, sachant que le produit d'extrusion (12) est extrudé vers l'intérieur de la salle blanche (24).
**caractérisé en ce**
**que** l'air pur expulsé par le dispositif à buse (18) et destiné à refroidir le produit d'extrusion est aspiré depuis la chambre blanche (24) au moyen d'une soufflante (30) disposée à l'extérieur de la salle blanche (24) et est conduit sans filtrage supplémentaire au dispositif à buse (18) de forme annulaire, disposé dans la salle blanche (24) ou dans une paroi (38) délimitant la salle blanche ou partant de cette paroi et disposé dans la salle blanche et que le produit d'extrusion est extrait et enroulé dans la salle blanche.

2. Procédé selon la revendication 1,
**caractérisé en ce**
**que** la tête d'extrusion (16) est disposée à l'intérieur de la salle blanche (24) ou dans la paroi (38) délimitant la salle blanche.

3. Procédé selon la revendication 1 ou 2,
**caractérisé en ce**
**que** le dispositif à buse (18) de forme annulaire entoure coaxialement la tête d'extrusion (16).

4. Procédé selon au moins une des revendications précédentes,
**caractérisé en ce**
**que** l'air pur à l'intérieur de la salle blanche (24) est aspiré au niveau d'une arrivée d'air pur (36) et/ou que l'air destiné à gonfler le film tubulaire est aspiré depuis la salle blanche (24).

5. Dispositif (10) destiné à la fabrication d'un produit d'extrusion (12), notamment d'un film tubulaire ou d'un ruban de film, avec au moins une extrudeuse (14) avec au moins une tête d'extrusion (16) de laquelle peut sortir en continu le produit d'extrusion (12) en matière synthétique thermoplastique, avec un dispositif à buse (18) de forme annulaire entourant le produit d'extrusion (12) et entourant une zone de sortie de l'extrudeuse, duquel dispositif à buse peut être expulsé de l'air pur (20) servant d'air de refroidissement à une température souhaitée, dans le sens de déplacement du produit d'extrusion (12), sachant que le produit d'extrusion (12) est extrudable vers l'intérieur d'une salle blanche (24) au moyen de l'extrudeuse (14) sachant que l'extrudeuse (14) est disposée à l'extérieur de la salle blanche (24) et que la tête d'extrusion (16) forme une interface entre l'extrudeuse (14) et la salle blanche (24).
**caractérisé en ce**
**qu'**une soufflante (30) est disposée à l'extérieur de la salle blanche (24) pour aspirer l'air pur (20) provenant de la salle blanche (24), que la soufflante est reliée sans filtre, par le biais d'une conduite de liaison (28), au dispositif à buse (18) de forme annulaire, disposé dans la salle blanche (24) ou dans une paroi (38) délimitant la salle blanche (24), ou partant de ladite paroi et disposé dans la salle blanche, pour amener l'air pur (20) servant d'air de refroidissement sans filtrage supplémentaire, et qu'un dispositif d'enroulement (40) est disposé dans la salle blanche pour enrouler le produit d'extrusion.

6. Dispositif selon la revendication 5,
**caractérisé en ce**
**que** le dispositif à buse (18) de forme annulaire est disposé coaxialement par rapport à la tête d'extrusion (16).

7. Dispositif selon la revendication 5 ou 6,
**caractérisé en ce**
**que** la salle blanche (24) présente un filtre pour salle blanche (36) pour amener l'air pur (34) et qu'une tubulure d'aspiration (32) reliée à la soufflante (30) est disposée au niveau de la sortie d'air pur du filtre pour chambre blanche (36).

8. Dispositif selon une des revendications 5 à 7,
caractérisé en ce
en que la tête d'extrusion (16) est disposée dans la paroi (38) délimitant la salle blanche (24) ou à l'intérieur de la salle blanche.
